# DEMANDE DE BREVET EUROPEEN

(11) **EP 4 590 071 A1**
(43) Date de publication de la demande: **23.07.2025**
(21) Numéro de dépôt: 24216458.0
(22) Date de dépôt: 29.11.2024
(51) Int. Cl.: H05B 1/02, B60H 1/00, B60H 1/22, H05B 3/14, H05B 3/34, H05B 3/36

(54) **SYSTÈME DE CONFORT INTERACTIF, NOTAMMENT POUR VÉHICULE**

(30) Priorité: 17.01.2024 FR 2400461
(71) Demandeur: VALEO SYSTEMES THERMIQUES, 78320 Le Mesnil-Saint-Denis (FR)
(72) Inventeur: LAPIERRE, William, 78320 Le Mesnil Saint Denis (FR); LECHAT, Yvan, 78320 Le Mesnil Saint Denis (FR)
(74) Mandataire: Valeo Systèmes Thermiques

(57) **Abrégé**

L'invention concerne un système de confort interactif (400), notamment destiné à être installé à l'intérieur d'un habitacle d'un véhicule, notamment d'un véhicule automobile, le système comprenant :
- une structure chauffante (401) comportant :
o au moins une couche résistive (402),
o au moins deux électrodes,

- un capteur capacitif (403) agencé pour détecter, dans une zone de détection, une présence d'une partie d'un passager, par exemple un bras, un coude, une main ou un doigt (FG) du passager,
- une unité de contrôle (410) configurée pour contrôler la structure chauffante (401) et le capteur capacitif (403) avec un mode de chauffage de la structure chauffante (401) et un mode de détection capacitive du capteur capacitif (403),
système dans lequel l'unité de contrôle (410) est configurée pour, dans une phase (Dreq) de montée en température de la structure chauffante (401) en vue d'atteindre une température prédéterminée, mettre en marche uniquement le mode de chauffage de la structure chauffante (401).

## Description

La présente invention se rapporte à un système de confort interactif, notamment pour véhicule. Le véhicule peut être de type terrestre, maritime ou aérien.

On connaît des panneaux chauffants qui comprennent une pluralité d'électrodes configurées pour délivrer de la chaleur par effet Joule en alimentant avec du courant électrique un revêtement conducteur. On pourra par exemple se reporter au document US2016059669.

Il existe notamment un besoin pour améliorer le confort thermique souhaité, notamment grâce à une plus grande réactivité du système.

L'invention a ainsi pour objet un système de confort interactif, notamment destiné à être installé à l'intérieur d'un habitacle d'un véhicule, notamment d'un véhicule automobile, le système comprenant :
- une structure chauffante comportant :
   o au moins une couche résistive agencée pour produire de la chaleur lorsque cette couche est parcourue par un courant électrique, cette couche résistive étant notamment une nappe à base de carbone déposée sur un substrat,
   ∘ au moins deux électrodes en contact électrique avec la couche résistive de manière à permettre à un courant électrique de circuler à travers la couche résistive entre ces deux électrodes,
- un capteur capacitif agencé pour détecter, dans une zone de détection, une présence d'une partie d'un passager, par exemple un bras, un coude, une main ou un doigt du passager,
- une unité de contrôle configurée pour contrôler la structure chauffante et le capteur capacitif avec un mode de chauffage de la structure chauffante et un mode de détection capacitive du capteur capacitif,
système dans lequel l'unité de contrôle est configurée pour, dans une phase de montée en température de la structure chauffante en vue d'atteindre une température prédéterminée, mettre en marche uniquement le mode de chauffage de la structure chauffante.

Dans l'invention, « mettre en marche uniquement le mode de chauffage » signifie que l'on laisse le capteur capacitif inactif jusqu'à ce que la température prédéterminée (par exemple une température de consigne) soit atteinte.

Selon l'un des aspects de l'invention, la température prédéterminée à atteindre lors de la phase de montée en température de la structure chauffante est une température de consigne.

Selon l'un des aspects de l'invention, dans le cas où l'unité de contrôle mémorise une température de protection, et si la température de consigne est choisie supérieure à cette température de protection, on laisse le capteur capacitif inactif jusqu'à ce que la température de protection soit atteinte et activer le fonctionnement du capteur capacitif à partir la température de protection.

Selon l'un des aspects de l'invention, la température de protection est choisie de sorte que, lorsque la structure chauffante est à une température inférieure à cette température de protection, le contact de la peau d'une personne avec le système de confort interactif ne provoque pas de brûlure sur la personne. Au-delà de cette température de protection, le contact peut provoquer une sensation désagréable ou une brûlure. Cette température de protection est par exemple choisie égale à 70°C ou 75°C.

Selon l'un des aspects de l'invention, le mode de chauffage de la structure chauffante et le mode de détection capacitive du capteur capacitif sont déclenchés de manière alternée, à savoir ne sont pas déclenchés simultanément et ne sont pas mis en oeuvre simultanément. Le système de confort interactif selon l'invention permet d'assurer le bon fonctionnement du capteur capacitif en coupant le chauffage de la structure chauffante lors du mode de détection capacitive. En particulier, par exemple, la structure chauffante peut être mise dans un mode de protection électrique qui permet de ne pas parasiter la détection capacitive par le capteur capacitif. Le fait d'interrompre le chauffage de la structure chauffante permet en outre de ne pas générer d'ondes électromagnétiques parasites du fait de courants électriques qui circuleraient au sein de cette structure chauffante.

L'invention permet, dans ce contexte, de réduire la durée nécessaire pour que la structure chauffante atteigne la température de consigne ou, dans le cas où une température de protection est utilisée, atteigne cette température de protection.

Le fait de laisser inactif le capteur capacitif pendant cette montée en température permet d'accélérer le chauffage, par rapport au cas où l'on aurait mis en oeuvre une alternance entre mode de chauffage et mode de détection capacitive pendant la montée en température de la structure chauffante. Pendant le mode de détection, la structure chauffante n'est pas chauffée.

Dans la présente invention, il est choisi de ne pas mettre en oeuvre cette alternance entre mode de chauffage et mode de détection capacitive pour privilégier la montée en température. Autrement dit, il est accepté de ne pas réaliser de détection capacitive pendant la montée en température. L'absence de détection capacitive pendant cette montée en température n'est pas préjudiciable au regard de la sécurité du ou des personnes susceptibles de toucher le système de confort interactif.

En effet, pendant cette montée en température qui peut prendre comme point de départ une température de repos, par exemple une température ambiante, le risque de brûlure par contact est inexistant car la structure chauffante est à une température (encore assez faible) ne provoquant pas de brûlure.

Selon l'un des aspects de l'invention la détection capacitive est omise pendant cette phase de montée en température pour privilégier la montée en température.

Selon l'un des aspects de l'invention, la température de repos est par exemple une température que prend le système de confort interactif lorsqu'il a été laissé au repos pendant une période assez longue, notamment pour qu'il soit en équilibre thermique avec l'environnement ambiant. La température de repos est par exemple une température ambiante, par exemple une température comprise entre 15°C et 25°C. La structure chauffante n'est pas encore, à ce moment, chauffée.

Une fois la température de consigne atteinte ou, le cas échéant, la température de protection atteinte, le mode de détection capacitive est utilisé de nouveau, pour détecter l'approche ou le contact d'une personne sur le système de confort interactif et interrompre le chauffage de la structure chauffante en cas de détection d'une approche ou d'un contact.

Selon l'un des aspects de l'invention, l'unité de contrôle est configurée pour, une fois la température de consigne atteinte ou, le cas échéant, la température de protection atteinte, mettre en oeuvre le mode de chauffage de la structure chauffante et le mode de détection capacitive du capteur capacitif de manière alternée

Selon l'un des aspects de l'invention, l'unité de contrôle est configurée pour interrompre le mode de chauffage en cas de détection d'un contact ou d'une approche d'une personne sur le système de confort interactif.

La température de consigne peut être une température égale à 100°C ou 110°C ou 120°C.

Selon l'un des aspects de l'invention, l'unité de contrôle est configurée pour utiliser des signaux PWM pour commander des interrupteurs, notamment de type MOSFET, pour contrôler le chauffage, et basculer alternativement du mode de chauffage au mode de détection capacitive.

D'autres moyens de contrôle, différents des signaux PWM, peuvent être utilisés.

Selon l'un des aspects de l'invention, le capteur capacitif comporte au moins une armature électrique formant une électrode capacitive, l'armature électrique et la structure chauffante forment un empilement dans lequel l'armature électrique est disposée entre la couche résistive et la zone de détection.

Selon l'un des aspects de l'invention, le système est agencé pour générer un signal de pilotage électrique du chauffage de la couche résistive de la structure chauffante, ce signal de pilotage électrique étant configuré pour faire fonctionner alternativement la structure chauffante en mode de chauffage et en mode de protection électrique dans lequel l'intensité d'un champ électrique entre la couche résistive de la structure chauffante et l'armature électrique du capteur capacitif est réduite de manière active à l'aide du signal de pilotage.

Selon l'un des aspects de l'invention, en mode de chauffage de la structure chauffante, le signal de pilotage est un signal PMW dont le rapport cyclique est réglable en fonction de la puissance de chauffage requise.

L'invention concerne également un procédé de gestion d'un système de confort interactif tel que décrit plus haut, comportant les étapes suivantes :
- recevoir une température de consigne ou, le cas échéant, une température de protection si la température de consigne est plus grande que la température de protection ;
- déclencher le mode de chauffage de la structure chauffante pour permettre une montée en température jusqu'à ce que la température de consigne soit atteinte ou, le cas échéant, la température de protection est atteinte ;
- activer le capteur capacitif pour permettre le mode de détection capacitive.

Selon l'un des aspects de l'invention, le mode de détection capacitive peut durer par exemple entre 2 ms et 5 ms (milliseconde) tandis que le mode de chauffage peut durer, par exemple, entre 10 ms et 3à ms.

Le procédé peut comporter l'étape suivante :
- activer le mode de chauffage de la structure chauffante de manière alternée avec le mode de détection capacitive, tant qu'aucune approche ou contact n'est détecté par le capteur capacitif en mode de détection capacitive.

Selon l'un des aspects de l'invention, en cas de détection d'un contact (toucher) ou d'une approche sur le système de confort interactif, l'unité de contrôle est configurée pour commander l'interruption du mode de chauffage.

Selon l'un des aspects de l'invention, l'armature électrique du capteur capacitif est formée sur un support par exemple plan, notamment qui est flexible.

Selon l'un des aspects de l'invention, ce support comporte un film réalisé en matière électriquement isolante, par exemple à base de plastique, notamment du PET (Polytéréphtalate d'éthylène).

Selon l'un des aspects de l'invention, l'armature est obtenue par sérigraphie ou impression sur le support.

Selon l'un des aspects de l'invention, le capteur capacitif comprend une pluralité d'armatures.

Selon l'un des aspects de l'invention, le capteur capacitif est agencé pour acquérir une température de réglage saisie par un passager, et une unité de contrôle est agencée pour délivrer une valeur de température de consigne en fonction de cette température de réglage saisie par le passager.

Selon l'un des aspects de l'invention, des électrodes capacitives forment une barre de commande à glissement, à savoir ces électrodes capacitives sont alignées, côte à côte avec un petit espace entre elles, suivant une rangée rectiligne.

Selon l'un des aspects de l'invention, la structure chauffante fait partie d'un dispositif de chauffage et d'éclairage tel ci-après.

Selon l'un des aspects de l'invention, le dispositif de chauffage et d'éclairage comporte une face fonctionnelle vers laquelle de la chaleur produite par la structure chauffante et la lumière produite par la structure lumineuse peuvent être envoyées, cette face fonctionnelle étant configurée pour diffuser la chaleur et la lumière ainsi reçues vers l'extérieur du dispositif de chauffage et d'éclairage, en direction par exemple d'une zone d'un habitacle de véhicule.

La face fonctionnelle est ainsi une face du dispositif de chauffage et d'éclairage sur laquelle les fonctions de chauffage et d'éclairage se manifestent, par exemple pour chauffer une zone d'un habitacle de véhicule et/ou pour éclairer une zone de cet habitacle ou créer un effet lumineux visible depuis l'habitacle.

Selon l'un des aspects de l'invention, le matériau de la couche résistive contient un oxyde transparent conducteur (TCO) choisi parmi l'oxyde d'indium-étain (ITO) et l'oxyde de Zinc (ZnO).

Selon l'un des aspects de l'invention, au moins une région de la structure chauffante, notamment la totalité de la structure chauffante, est placée entre la face fonctionnelle et la structure lumineuse de sorte que de la lumière issue de cette structure lumineuse traverse la couche résistive de la structure chauffante avant d'atteindre la face fonctionnelle.

Selon l'un des aspects de l'invention, les structures chauffante et lumineuse forment des couches empilées.

Selon l'un des aspects de l'invention, le dispositif de chauffage et d'éclairage présente une forme de panneau.

Selon l'un des aspects de l'invention, le dispositif de chauffage et d'éclairage est souple, à savoir il peut être conformé pour prendre une forme prédéterminée.

Selon l'un des aspects de l'invention, la structure chauffante et la structure lumineuse sont solidaires l'une de l'autre.

Selon l'un des aspects de l'invention, la structure chauffante est en contact avec la structure lumineuse.

Selon l'un des aspects de l'invention, la structure chauffante et la structure lumineuse sont assemblées par lamination.

Selon l'un des aspects de l'invention, la structure chauffante comprend un réseau d'électrodes comportant une pluralité d'électrodes de distribution et une pluralité d'électrodes de contact alimentées en courant électrique par les électrodes de distribution.

Les électrodes de distribution peuvent être vues comme des électrodes « parents » et les électrodes de contact comme des électrodes « enfants ».

Selon l'un des aspects de l'invention, les électrodes de contact sont, au moins pour certaines d'entre elles, notamment pour toutes les électrodes de contact du réseau d'électrodes, parallèles entre elles.

Selon l'un des aspects de l'invention, le réseau d'électrodes comprend des électrodes de distribution agencées pour conduire du courant électrique d'une source électrique vers les électrodes de contact, plusieurs électrodes de contact se raccordant à une même électrode de distribution.

Selon l'un des aspects de l'invention, une au moins des électrodes de distribution est rectiligne sur une partie au moins de sa longueur, et les électrodes de contact qui sont associées à cette électrode de distribution se raccordant, par exemple perpendiculairement, à cette électrode de distribution.

Selon l'un des aspects de l'invention, les électrodes de distribution peuvent présenter des formes différentes, notamment courbes avec des arrondis.

Les électrodes de distribution peuvent être parallèles entre elles ou non.

Selon l'un des aspects de l'invention, le réseau d'électrodes comporte au moins deux électrodes de distribution qui sont parallèles entre elles sur au moins une partie de leur longueur, et leurs électrodes de contact associées sont disposées entre ces deux électrodes de distribution et sont alternées avec une inter-distance qui décroit en lien avec la décroissance de la tension présente entre les paires d'électrodes de manière à maintenir sensiblement uniforme la puissance électrique entre les paires d'électrodes de contact.

Selon l'un des aspects de l'invention, les électrodes et la couche résistive sont portées sur un substrat réalisé dans un matériau souple capable de prendre une forme prédéterminée par déformation, ce substrat étant notamment également extensible.

Selon l'un des aspects de l'invention, la couche résistive est déposée sur le substrat, et se présente sous la forme d'une nappe, notamment une nappe d'encre. Cette nappe est notamment d'épaisseur sensiblement constante sur toute sa superficie.

Selon l'un des aspects de l'invention, les électrodes sont déposées sur le substrat par impression, sérigraphie ou lamination de plusieurs matériaux.

Selon l'un des aspects de l'invention, la couche résistive est déposée sur le substrat par impression, sérigraphie ou lamination de plusieurs matériaux.

Selon l'un des aspects de l'invention, la couche résistive est présente sur une face du substrat.

L'invention a encore pour objet un composant d'habitable de véhicule, comportant un dispositif de chauffage et d'éclairage tel que précité.

Selon l'un des aspects de l'invention, le composant est choisi parmi l'un des composants d'habitable suivants :
- un composant agencé pour être intégré à une portière du véhicule,
- un composant agencé pour être intégré à une planche de bord,
- un composant d'habillage de cave à pied,
- un composant d'habillage de pavillon ou de toit d'habitacle,
- un composant d'habillage d'accoudoir,
- un composant d'une boite à gant,
- un composant d'habillage de pilier.

Selon l'un des aspects de l'invention, le composant d'habitacle qui comprend le dispositif de chauffage et d'éclairage est indépendant d'un siège du véhicule.

Selon l'un des aspects de l'invention, le composant d'habitacle qui comprend le dispositif de chauffage et d'éclairage est agencée pour chauffer par radiation thermique ou par conduction thermique ou contact thermique, et non par chauffage par chaleur transportée par de l'air en mouvement forcé au sein de l'habitacle.

D'autres caractéristiques, détails et avantages de l'invention ressortiront à la lecture de la description donnée ci-après à titre indicatif en relation avec des dessins dans lesquels :
- La figure 1 [Fig. 1] est une représentation schématique d'un habitacle de véhicule automobile équipé avec un dispositif de chauffage et d'éclairage selon un exemple de réalisation de l'invention,
- La figure 2 [Fig. 2] est une représentation schématique, en coupe, du dispositif de chauffage et d'éclairage selon un exemple de réalisation de l'invention ;
- La figure 3 [Fig. 3] est une représentation schématique d'une structure chauffante du dispositif de chauffage et d'éclairage de la figure 2 ;
- La figure 4 [Fig. 4] est une représentation schématique d'une structure chauffante selon un autre exemple de réalisation de l'invention ;
- La figure 5 [Fig. 5] est une représentation schématique d'une structure lumineuse du dispositif de chauffage et d'éclairage de la figure 2 ;
- La figure 6 [Fig. 6] est une représentation schématique d'une structure lumineuse selon un autre exemple de réalisation de l'invention ;
- La figure 7 [Fig. 7] est une représentation schématique de la structure lumineuse de la figure 6, sur l'autre face ;
- La figure 8 [Fig. 8] est une vue de détail de la nappe textile de la structure lumineuse de la figure 6 ;
- La figure 9 [Fig. 9] est une représentation schématique, en coupe, d'un système de confort interactif selon un exemple de réalisation de l'invention ;
- La figure 10 [Fig. 10] illustre schématiquement un capteur capacitif équipant le système de confort interactif de la figure 9 ;
- La figure 11 [Fig. 11] est un schéma électrique du système de confort interactif de la figure 9 ;
- La figure 12 [Fig. 12] illustre les signaux de pilotage utilisés dans le schéma électrique de la figure 11 ;
- La figure 13 [Fig. 13] est un schéma électrique d'un système de confort interactif selon un autre exemple de réalisation de l'invention ;
- La figure 14 [Fig. 14] illustre une structure pour visualiser une capacité parasite,
- La figure 15 [Fig. 15] montre des graphes liés à un procédé de gestion selon l'invention, avec en abscisse, le temps et, en ordonnée, la température pour le graphe du haut, et la succession de modes de fonctionnement pour le graphe du bas.

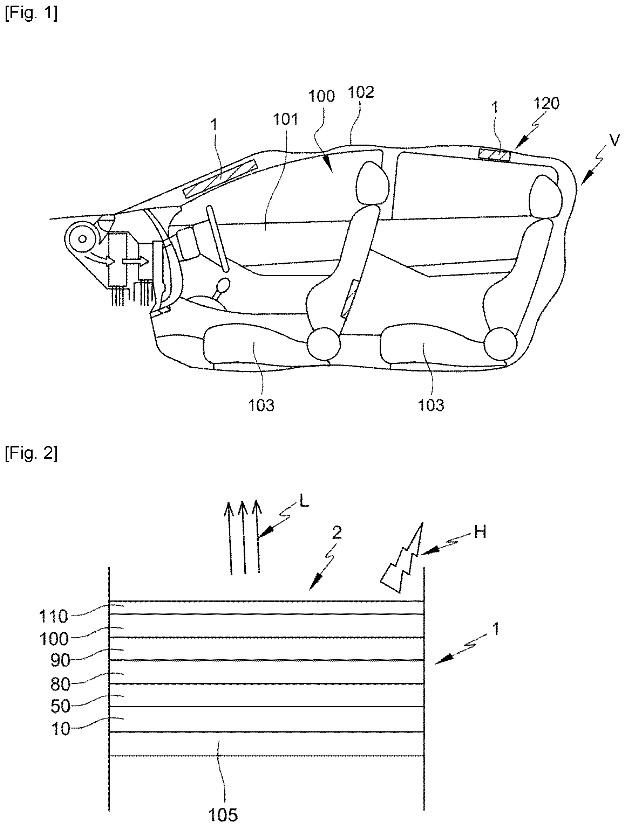

On a représenté sur la figure 1 un habitacle 100 d'un véhicule automobile V. On a également représenté des portières 101 et le toit 102 de l'habitacle. Des sièges 103 pour les passagers sont également visibles.

Dans l'exemple décrit, des dispositifs de chauffage et d'éclairage 1 sont intégrés au toit 102 de l'habitacle.

Comme illustré sur la figure 2, chaque dispositif de chauffage et d'éclairage 1 est fixé sur une structure de toit 105 et comprend, selon un empilement, successivement :
- une structure lumineuse 10 capable d'émettre une lumière visible, placée contre la structure de toit 105,
- une structure chauffante 50,
- un substrat rigide 80, qui est, dans l'exemple décrit, une pièce de structure en matériau plastique translucide, ou en matériau plastique transparent,
- une couche en matériau souple 90, ici une couche de mousse, agencée pour conférer au dispositif de chauffage et d'éclairage 1 une sensation de douceur au toucher, cette couche 90 pouvant être omise le cas échéant,
- un masque 100 réalisé dans un matériau qui bloque la lumière issue de la structure lumineuse 10 et comprenant des ajours pour laisser passer cette lumière selon un motif conféré par ces ajours, ce maque 100 pouvant être omis le cas échéant,
- un décor 110 qui peut être de type textile, cuir, bois ou plastique.

Chaque dispositif de chauffage et d'éclairage 1 présente une forme de panneau, avec une face fonctionnelle 2 vers laquelle de la chaleur H produite par la structure chauffante 50 et la lumière L produite par la structure lumineuse 10 peuvent être envoyées, cette face fonctionnelle 2 étant configurée pour diffuser la chaleur H et la lumière L ainsi reçues vers l'habitacle 100.

La face fonctionnelle 2 est ainsi une face externe du dispositif de chauffage et d'éclairage 1 sur laquelle les fonctions de chauffage et d'éclairage se manifestent, pour chauffer une zone de l'habitacle 100 et/ou pour éclairer une zone de cet habitacle 100 ou créer un effet lumineux visible depuis l'habitacle 100.

Le dispositif de chauffage et d'éclairage 1 peut être souple, à savoir il peut être conformé pour prendre une forme prédéterminée.

La structure chauffante 50 et la structure lumineuse 10 sont assemblées par lamination.

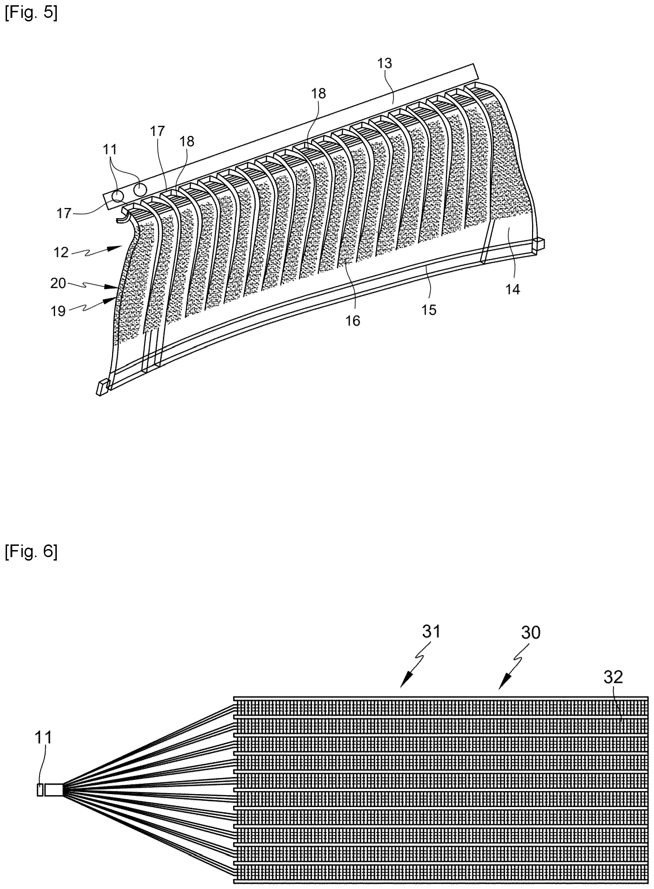

Comme décrit en référence à la figure 5, la structure lumineuse 10 comprend des sources de lumière 11, ici sous d'une rangée de LED (diode électroluminescente). Seules deux LED 11 sont représentées sur la figure 5.

La lumière visible émise par la structure lumineuse 10 est une lumière visible par l'oeil humain.

Dans l'exemple de la figure 5, la structure lumineuse 10 comprend par exemple un moteur de lumière 12 qui est un dispositif électronique à circuit imprimé 13, comprenant les LED 11 et un guide de lumière 14 pour guider la lumière émise par la ou les LED.

Le guide de lumière 14 comporte une plaque 15 dans laquelle de la lumière peut se propager, cette plaque comprenant une face d'émission 16 de la lumière.

La plaque 15 présente une forme complexe courbe avec une face principale 19 se rapprochant d'une surface plane.

Cette plaque 15 comprend des facettes 17 d'injection de la lumière issue des LED 11, ces facettes 17 étant à l'extrémité de régions rétrécies coudées 18 de la plaque 15.

La plaque 15 est réalisée en matériau à base de plastique, avec une forme prédéterminée, à savoir qu'elle ne se déforme pas ou sensiblement pas lors de son intégration dans le dispositif de chauffage et d'éclairage 1.

La plaque 15 présente deux faces séparées par l'épaisseur de la plaque, l'une de ces faces présentant des reliefs d'activation optique 20 agencés pour provoquer la déviation de la lumière vers la face d'émission de la lumière 16 qui est opposée à la face sur laquelle sont réalisées les reliefs 20.

Ainsi, la plaque 15 forme une source lumineuse surfacique.

La face d'émission 16 est en vis-à-vis de la structure chauffante 50.

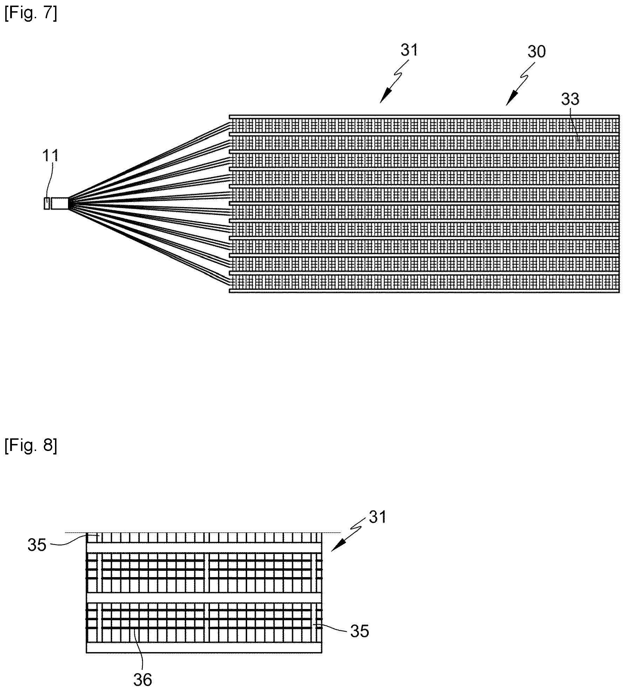

On a illustré, en référence aux figures 6 et 7, une structure lumineuse 30, qui peut dans un autre exemple de mise en oeuvre de l'invention, être utilisée à la place de la structure lumineuse 10 précédemment décrite, dans le dispositif de chauffage et d'éclairage 1.

Dans cet exemple, la structure lumineuse 30 comprend une nappe tissée 31.

La figure 6 représente la face 32 de la structure lumineuse 30 qui est en regard de la structure chauffante 50.

La figure 7 représente la face 33 de la structure lumineuse 30 qui est opposée à la face 32.

La nappe textile 31 comprend des fils textiles 35 et des fibres optiques 36 entrelacés, comme illustré sur la figure 8.

Les fils textiles 35 comprennent des fils dans une matière naturelle tels que des fils végétaux, et/ou des fils dans une matière artificielle ou synthétique.

Les fibres optiques 36, appelés fils en chaîne, sont tissés avec des fils textiles 35, en trame.

Dans un autre exemple de réalisation de l'invention, non illustrée, la nappe textile peut comprendre des fibres optiques 36 en trame tissés avec des fils textiles 35, en chaîne.

La nappe textile 31 peut comprendre des fils textiles 35, agencés en chaîne et en trame selon une armature de type toile.

Les fibres optiques 36 sont alors ponctuellement liées aux fils textiles de l'armature 35 au moyen de fils textiles, les fibres optiques 36 étant sensiblement positionnée sur une surface parallèle à la surface définie par l'armature 35.

L'armature 35 est souple, c'est-à-dire capable de prendre une forme prédéterminée par déformation.

La nappe textile 31 a une épaisseur comprise entre 0,1 mm et 0,7 mm.

Les fibres optiques 36 peuvent être formées chacune par une âme gainée d'un polymère fluoré. L'âme des fibres optiques peut être formée dans un matériau choisi parmi le polyméthacrylate de méthyle (PMMA) et le polycarbonate (PC). En variante, les fibres optiques peuvent être formées chacune par un fil en fibres de verre.

Les fils textiles 35 peuvent être formés dans un matériau choisi parmi la laine, l'aramide, le polyamide, le polyester et le coton.

Du fait du schéma de tissage, les fibres optiques 36 s'étendent majoritairement sur la face 32 de la nappe 31, sans être masqués outre mesure par les fils textiles 35 qui recouvrent davantage la face opposée 33.

Les fibres optiques 36 sont agencées pour émettre latéralement de la lumière vers l'extérieur de la fibre.

Une ou plusieurs LED 11 alimentent les fibres optiques 36 qui sont rangées de manière convergente vers ce ou ces LED 11.

Nous allons maintenant décrire, plus en détail, la structure chauffante 50.

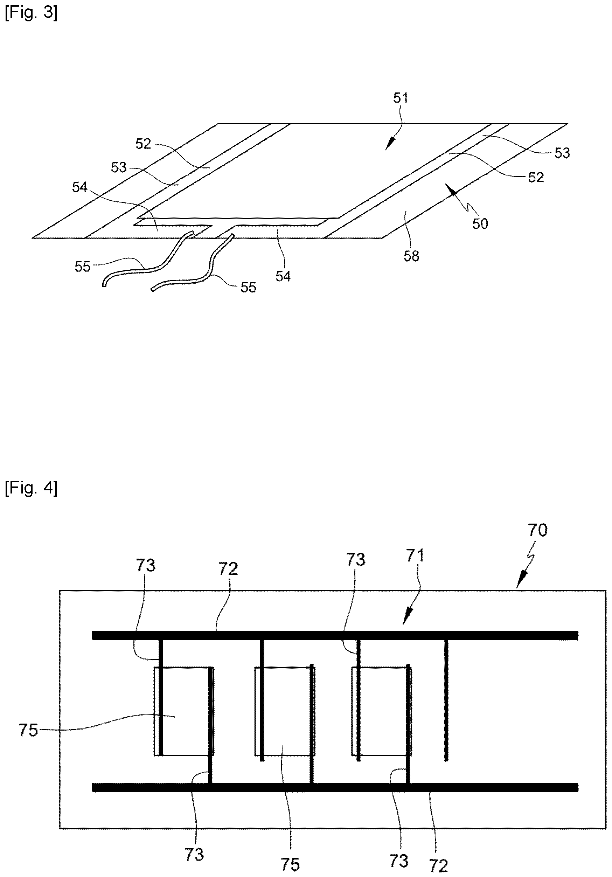

Comme illustré sur la figure 3, cette structure chauffante 50 comprend une couche résistive 51 agencée pour produire de la chaleur lorsque cette couche est parcourue par un courant électrique I, cette couche résistive étant réalisée dans un matériau capable de laisser passer de la lumière émise par la structure lumineuse 10 ou 30.

La structure chauffante 50 comprend en outre deux électrodes de distribution 52, qui sont en contact électrique avec la couche résistive 51 de manière à permettre à un courant électrique I de circuler à travers la couche résistive 51 entre ces deux électrodes 52.

Ces électrodes 52 présentent des tronçons 53 parallèles entre lesquels se trouve la couche résistive 51, et des tronçons transversaux 54 qui sont connectés à des fils d'alimentation électriques 55.

Le matériau de la couche résistive 51 contient un oxyde transparent conducteur (TCO) choisi parmi l'oxyde d'indium-étain (ITO) et l'oxyde de Zinc (ZnO).

Ainsi la couche résistive 51 est à la fois transparente à la lumière de la structure lumineuse 30, et permet par effet Joule de générer de la chaleur.

Dans l'exemple décrit, la totalité de la structure chauffante 50 est placée entre la face fonctionnelle 2 et la structure lumineuse 30 de sorte que de la lumière issue de cette structure lumineuse 30 traverse la couche résistive 51 de la structure chauffante avant d'atteindre la face fonctionnelle 2.

Les électrodes 52 et la couche résistive 51 sont portées sur un substrat 58 réalisé dans un matériau souple capable de prendre une forme prédéterminée par déformation, ce substrat étant notamment également extensible.

Les électrodes 52 sont déposées sur le substrat 58 par impression, sérigraphie ou lamination de plusieurs matériaux.

Les électrodes 52 sont réalisées en matériau conducteur, notamment métallique tel que de l'encre chargée de particules conductrices, notamment de particules d'argent ou de cuivre.

Par ailleurs, la couche résistive 51 est déposée sur le substrat par impression, sérigraphie ou lamination de plusieurs matériaux.

La couche résistive 51 est présente sur une face du substrat 58, en regard de la face fonctionnelle du dispositif 1.

Le substrat 58 est de type textile, tissé ou tricoté, ou de type non-tissé.

Le non-tissé peut comporter un mélange de fibres en polypropylène et/ou de fibres en polyester. D'autres fibres peuvent être utilisées, par exemple des fibres naturelles.

En variante, le substrat 58 peut être une feuille de plastique souple ou une mousse telle que le TPU (thermoplastique polyuréthane).

Le substrat 58 présente une épaisseur inférieure à 1 cm, et une superficie d'au moins 10 cm2, ou d'au moins 50 cm2, ou d'au moins 500 cm2.

Dans un autre exemple illustré à la figure 4, la structure chauffante 50 peut être remplacée, dans le dispositif de chauffage et d'éclairage 1, par une structure chauffante 70 qui comprend un réseau d'électrodes 71 tel que décrit ci-dessous.

Ce réseau d'électrodes 71 comporte deux électrodes de distribution rectilignes 72 et une pluralité d'électrodes de contact 73 alimentées en courant électrique par les électrodes de distribution 72.

Les électrodes de distribution 72 peuvent être vues comme des électrodes « parents » et les électrodes de contact 73 comme des électrodes « enfants ».

Plusieurs électrodes de contact 73 se raccordent à une même électrode de distribution 72, suivant un ange droit.

Les électrodes de contact 73 sont parallèles entre elles, et forment des paires associées chacune à une couche résistive 75.

Ces couches 75 sont séparées les unes des autres et formes plusieurs zones chauffantes, par exemple à motifs répétitifs.

Dans un autre exemple non illustré, les électrodes de distribution 72 peuvent présenter des formes différentes, notamment courbes avec des arrondis.

Le dispositif de chauffage et d'éclairage 1 comporte le décor 110 qui est visible depuis l'intérieur de l'habitacle 100, ce décor 110 étant un habillage de l'habitable, tel que par exemple un tissu, un cuir ou un revêtement esthétique.

La structure chauffante 50 ou 70, la structure lumineuse 30 et le décor 110 forment des couches empilées.

Le dispositif 1 permet ainsi de réaliser, outre les fonctions de chauffage et d'éclairage, une fonction de décoration, par exemple avec une zone en cuir ou en tissu prédéterminé, visible depuis l'habitacle.

De manière générale, le dispositif 1 peut être utilisé pour former un composant 120 choisi parmi l'un des composants d'habitable suivants :
- un composant agencé pour être intégré à une portière du véhicule,
- un composant agencé pour être intégré à une planche de bord,
- un composant d'habillage de cave à pied,
- un composant d'habillage de pavillon ou de toit d'habitacle,
- un composant d'habillage d'accoudoir,
- un composant d'une boite à gant,
- un composant d'habillage de pilier.

La figure 1 montre le cas d'utilisation dans un toit de véhicule.

Le composant d'habitacle 120 qui comprend le dispositif de chauffage et d'éclairage est indépendant d'un siège 103 du véhicule.

Le composant d'habitacle 120 qui comprend le dispositif de chauffage et d'éclairage 1 est agencée pour chauffer par radiation thermique ou par conduction thermique ou contact thermique, et non par chauffage par chaleur transportée par de l'air en mouvement forcé au sein de l'habitacle.

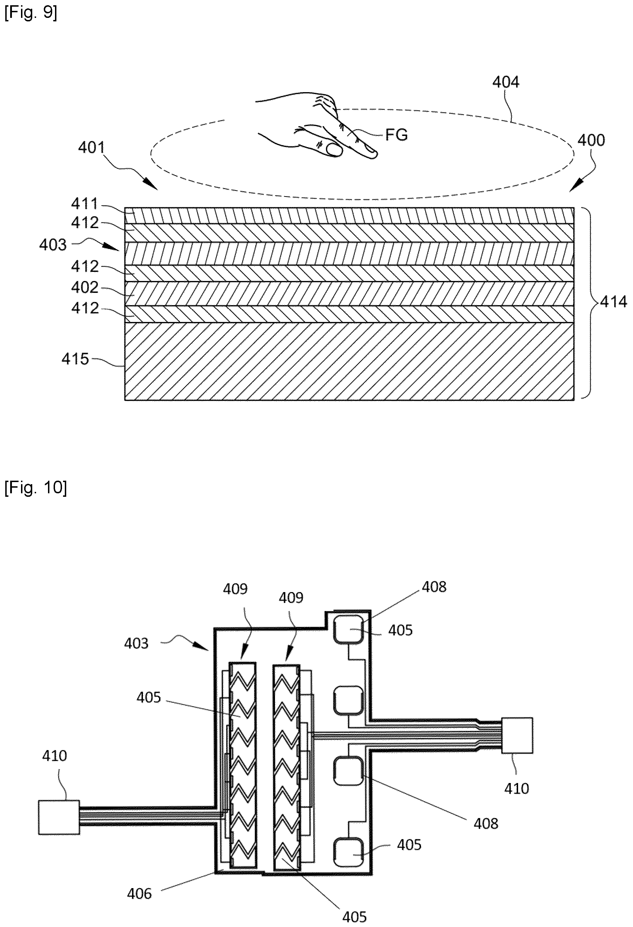

On va maintenant décrire en référence aux figures 9 et 10 un autre exemple de réalisation de l'invention.

Dans cet exemple, le système de confort interactif 400 comprend :
- une structure chauffante 401 comportant :
   ∘ une couche résistive 402 sous la forme d'une nappe d'encre à base de carbone, similaire à la couche résistive 51 précédemment décrite,
   ∘ des électrodes (non représentées sur la figure 9) en contact électrique avec la couche résistive 402 de manière à permettre à un courant électrique de circuler à travers la couche résistive402 entre ces deux électrodes.

Le système de confort interactif 400 comprend en outre un capteur capacitif 403 agencé pour détecter, dans une zone de détection 404, une présence d'une partie d'un passager, par exemple un bras, un coude, une main ou un doigt du passager.

Le capteur capacitif 403 est agencé pour détecter sans contact une partie d'un passager, par exemple un bras, un coude, une main ou un doigt FG du passager. En variante, cette détection peut être effectuée avec contact.

Comme on peut le voir sur la figure 10, le capteur capacitif 403 comporte, sur un support flexible 406, plusieurs armatures électriques 405 formant des électrodes capacitives 405 réparties sur ce support flexible 406 réalisé par exemple en matière plastique transparente ou translucide, par exemple sous la forme d'un film. Les armatures électriques 405 peuvent être réalisées en PEDOT, en mailles d'argent (silver mesh en anglais) ou encore en ITO.

Certaines électrodes capacitives 405, de forme sensiblement carrée, forment des boutons de commande capacitifs 408 associés par exemple à des réglages de températures de consigne différentes pour commander le chauffage de la structure chauffante 50.

D'autres électrodes capacitives 405 forment une barre de commande à glissement 409, à savoir ces électrodes capacitives 405 sont alignées, côte à côte avec un petit espace entre elles, suivant une rangée rectiligne. Cette barre de commande à glissement 409, encore appelée « Slider » en anglais, est commandable par le passage d'un doigt FG à proximité, sans contact, ou en contact physique. Le mouvement de glissement du doigt le long de cette barre de commande à glissement 409 permet de commander le type de réglage souhaité, en fonction de l'électrode capacitive 405 au-dessus de laquelle s'arrête le mouvement de glissement du doigt FG.

On a ainsi, sur le support flexible 406, des boutons 408 et des barres de commande à glissement 409, pour permettre au passager de commander différentes fonctions.

Chaque électrodes capacitives 405 est agencée pour mesurer la capacité qui apparait entre deux surfaces. La valeur de cette capacité augmente à mesure que la distance entre les deux surfaces diminue. Chaque électrode capacitive 405 agit comme une première surface conductrice et une partie du corps humain, à une distance de couplage capacitif avec l'électrode capacitive 405, agit comme une seconde surface conductrice. Les changements de distance entre les deux surfaces conductrices modifient la capacité qui est détectable par une unité de contrôle 410.

Le capteur capacitif 403 est agencé ici pour acquérir une température de réglage saisie par un passager, et l'unité de contrôle 410 est agencée pour délivrer une valeur de température de consigne en fonction de cette température de réglage saisie par le passager.

Le capteur capacitif 403 se présente sous la forme d'un composant flexible qui est intercalé entre la couche résistive 402 et une couche externe 411, qui sert de protection et/ou de décor, notamment réalisée en PMMA, ou poly-méthacrylate de méthyle. Bien entendu, peut être utilisé tout autre matériau de protection et/ou de décor isolant électriquement.

Des couches d'adhésif 412 sont prévues pour assurer la cohésion de l'empilement 414. Ces couches d'adhésif 412 sont par exemple chacune une feuille adhésive double face.

L'empilement 414 comprend également une couche de mousse 415.

L'empilement 414 comprend ainsi successivement :
- la couche de mousse 415,
- l'une des couches d'adhésif 412,
- la couche résistive 402,
- l'une des couches d'adhésif 412,
- le capteur capacitif 403,
- l'une des couches d'adhésif 412,
- la couche externe 411 en PMMA.

Les électrodes capacitives 405 sont obtenues par sérigraphie ou impression sur le support flexible 406.

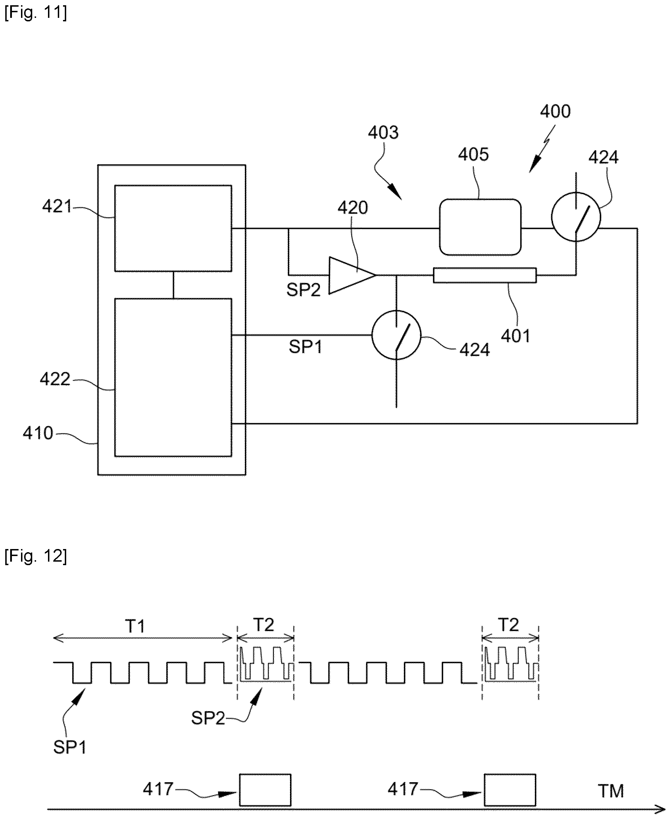

On va maintenant décrire en référence à la figure 11 un schéma électrique du système de confort interactif 400, schéma sur lequel on voit la structure chauffante 401 symbolisée par une résistance associée et l'une des électrodes capacitives 405, ces éléments étant connectés à l'unité de contrôle 410.

Pour protéger le fonctionnement de l'électrode capacitive 405 de perturbations électriques, l'unité de contrôle 410 est agencée pour générer un signal de pilotage électrique de la structure chauffante 401, ce signal de pilotage électrique étant sélectivement d'un premier type SP1 configuré pour faire fonctionner la structure chauffante 401 en mode de chauffage sur une durée T1 (voir figure 12) et d'un deuxième type SP2 configuré pour faire fonctionner la structure chauffante 401 en mode de protection électrique, sur une durée T2 (voir figure 12), dans lequel l'intensité d'un champ électrique entre la couche résistive 402 de la structure chauffante 401 et l'armature électrique 405 du capteur capacitif 403 est réduite de manière active à l'aide du signal de pilotage SP2, comme expliqué plus bas.

Les phases T1 par exemple de 10 millisecondes (ms), et T2 par exemple de 2 ms, se succèdent ainsi, avec des modulations SP1 et SP2 qui sont fonction des besoins de chauffage et de détection capacitive.

La figure 12 représente, en fonction du temps TM, en haut, le signal de pilotage électrique SP1 du chauffage de la couche résistive 402 en alternance avec le signal de pilotage électrique SP2 de protection électrique et, en bas, des étapes 417 d'acquisition du signal capacitif du capteur capacitif 403 pour détecter l'approche par exemple d'un doigt FG.

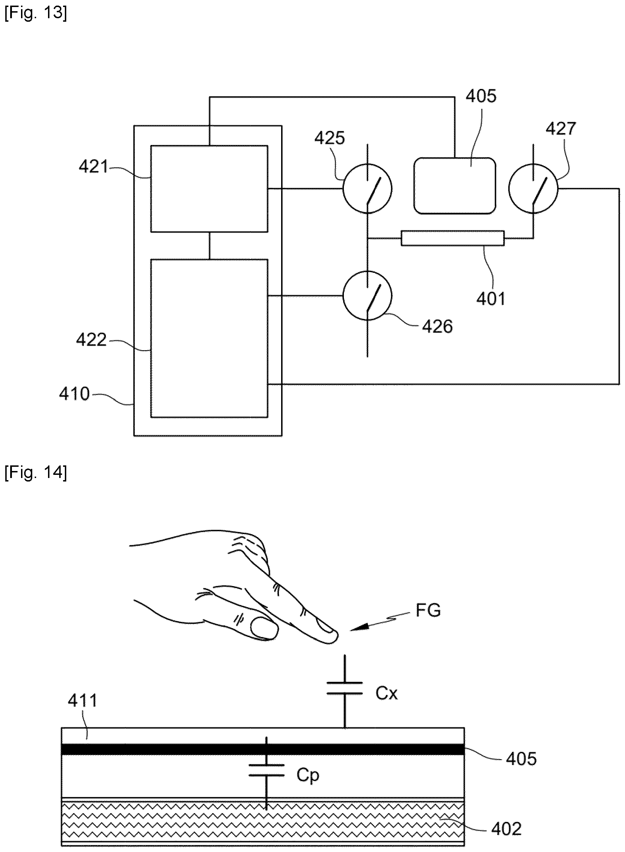

Comme illustré sur la figure 14, en l'absence d'un tel mode de protection électrique, un fort champ électrique peut apparaître entre la couche résistive 402 de la structure chauffante 401 et l'armature électrique 405 du capteur capacitif 403, ce qui s'accompagne d'une forte capacité parasite Cp qui empêche de mesurer la capacité Cx entre l'armature électrique 405 du capteur capacitif et la partie du corps humain, par exemple le doigt FG. En effet la valeur Cp peut être très grande (notamment du fait de sa nature carbonée et de ses relativement grandes dimensions) devant la valeur Cx de sorte que les petites variations de la valeur Cx sont difficilement détectables. La valeur Cx, par la présence de la couche externe 411 en PMMA qui empêche que le doigt FG ne vienne en contact avec l'électrode 405, se trouve limitée.

Des explications supplémentaires sur ce phénomène sont données dans ce qui suit.

L'armature électrique 405 du capteur capacitif 403 se trouve à un potentiel électrique, par exemple de 3 Volts, nécessaire à son fonctionnement. Le doigt FG et la couche résistive 402 de la structure chauffante 401 sont assimilés au plan de masse, à 0 Volt. Du fait de la différence de potentiel entre l'électrode 405 et le doigt FG de l'utilisateur, s'établit un champ électrique. Le capteur capacitif 403 détecte les variations d'intensité de ce champ dues à l'approche du doigt FG, à travers la capacité électrique Cx établie entre et le doigt FG et l'électrode 405. Si l'on ne met pas en oeuvre l'invention, on observe qu'entre l'électrode 405 et la couche résistive 402 existe une différence de potentiel et se crée un champ électrique et une capacité électrique Cp parasites. La capacité Cp s'additionne à la capacité Cx, ce qui perturbe le fonctionnement du capteur capacitif 403. La manifestation est généralement une forte diminution de la sensibilité du capteur capacitif 403, pouvant provoquer la désactivation de celui-ci. Un cas critique peut survenir lorsque le potentiel électrique de la couche résistive 402 n'est pas constant. Cette situation se produit lorsqu'on met en fonction la couche résistive 402. Pour moduler la puissance de chauffe, la couche résistive 402 est alimentée avec une tension PWM. Ces variations de potentiel créent une perturbation du capteur capacitif 403 plus difficile à filtrer. La capacité Cp est d'autant plus grande que la superficie de la couche résistive 402 est grande. A titre de comparaison, une électrode 405 peut présenter des dimensions de l'ordre de 10 mm x 10mm, tandis que la couche résistive 402 peut mesurer, par exemple, 100 mm x 500 mm.

Le champ entre le doigt FG et l'électrode 405 est un effet souhaité tandis que celui entre l'électrode 405 et la couche résistive 402 est un facteur parasite.

Grâce à l'invention, dans le mode de protection, l'intensité du champ électrique entre la couche résistive 402 de la structure chauffante 401 et l'armature électrique 405 du capteur capacitif 403 est réduite, ce qui a pour conséquence d'avoir un faible ou très faible effet de la capacité parasite du côté de la couche résistive 402 de la structure chauffante. La synchronisation des signaux de pilotage sur la structure chauffante 401 et le capteur capacitif 403 permet d'éviter des courants parasites entre eux et donc d'éviter des perturbations de mesures de Cx. Dans l'invention, la couche résistive 402 joue elle-même un rôle de protection pendant la durée T2, sans avoir recours à un dispositif distinct dédié à cette protection.

Dans l'exemple de l'invention, en mode de chauffage de la structure chauffante 401 (par exemple sur la durée T1 de la figure 12), le signal de pilotage SP1 est un signal PMW dont le rapport cyclique est réglable en fonction de la puissance de chauffage requise. Les signaux de pilotage permettent un pilotage en tension.

En mode de protection électrique, le signal de pilotage SP2 de la structure chauffante 401 est identique au signal de pilotage du capteur capacitif 403, comme on peut le voir sur la figure 12.

Cette synchronisation permet de réduire l'intensité du champ électrique entre la couche résistive 402 de la structure chauffante et l'armature électrique 405 du capteur capacitif.

Le signal de pilotage de la couche résistive 402 est une recopie du signal appliqué à l'électrode capacitive 405 du capteur capacitif.

Comme visible sur la figure 11, pour permettre le mode de protection décrit ci-dessus, le système 400 comporte un amplificateur suiveur 420, de gain 1, à forte impédance d'entrée, configuré pour produire une recopie du signal SP2 provenant d'un circuit de contrôle 421 du capteur capacitif 403, ce signal recopié étant appliqué à la structure chauffante 401.

Un module de contrôle de puissance électrique 422 associé à la structure chauffante 401 est configuré pour commander, en mode de chauffage, deux interrupteurs 424 sur la base d'un signal de pilotage en PWM.

Les interrupteurs 424 sont aux deux bornes de la structure chauffante 401.

En mode de protection, ces deux interrupteurs 424 sont ouverts et c'est le signal recopié qui pilote la structure chauffante 401.

En mode de chauffage, l'amplificateur suiveur 420 est désactivé (sortie en haute impédance), et l'un des deux interrupteurs 424 est maintenu fermé et l'autre de ces interrupteurs 424 est opéré par le signal PWM de chauffage.

Selon un autre mode de réalisation de l'invention illustré à la figure 13, le système comporte un interrupteur 425 formé par un transistor, associé au capteur capacitif 403, et deux interrupteurs 426 et 427 respectivement à l'entrée de la structure chauffante 401 et à sa sortie.

Dans cet exemple, en mode de chauffage, l'interrupteur 425 est ouvert, et l'un des deux interrupteurs 426 et 427 est maintenu fermé et l'autre de ces interrupteurs 426 et 427 est opéré par le signal PWM de chauffage.

En mode protection, l'interrupteur 425 et l'interrupteur 426 sont pilotés alternativement, de manière synchrone avec le capteur capacitif 403, tandis que l'interrupteur 427 est ouvert.

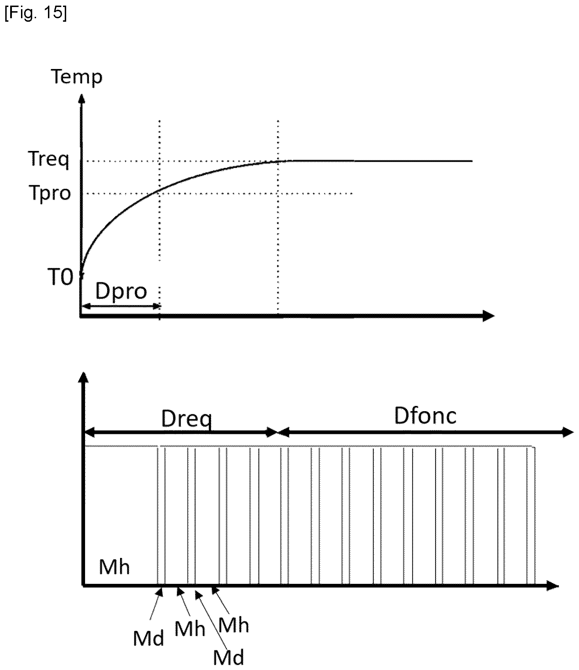

On va maintenant décrire, en référence à la figure 15, un procédé de gestion du système de confort interactif 400 décrit plus haut.

Dans cet exemple de réalisation de l'invention, l'unité de contrôle 410 est configurée pour contrôler la structure chauffante 401 et le capteur capacitif 403 avec un mode de chauffage de la structure chauffante 401 et un mode de détection capacitive du capteur capacitif 403.

L'unité de contrôle 410 est configurée pour, dans une phase de montée en température de la structure chauffante 410 en vue d'atteindre une température prédéterminée, ici une température de consigne Treq, mettre en marche uniquement le mode de chauffage de la structure chauffante 401.

Dans l'exemple décrit, l'unité de contrôle 410 mémorise une température de protection Tpro, et si la température de consigne Treq est choisie supérieure à cette température de protection Tpro (comme c'est le cas dans l'exemple de la figure 15), le capteur capacitif 403 est laissé inactif jusqu'à ce que la température de protection Tpro soit atteinte puis est activé le fonctionnement du capteur capacitif 403 à partir la température de protection Tpro.

La température de protection Tpro est choisie de sorte que, lorsque la structure chauffante 401 est à une température inférieure à cette température de protection Tpro, le contact de la peau d'une personne avec le système de confort interactif 400 ne provoque pas de brûlure sur la personne. Au-delà de cette température de protection Tpro, le contact peut provoquer une sensation désagréable ou une brûlure. Cette température de protection Tpro est par exemple choisie égale à 70°C ou 75°C.

Dans la présente invention, le mode de chauffage (Mh) de la structure chauffante 401 et le mode de détection capacitive (Md) du capteur capacitif 403 sont déclenchés de manière alternée, à savoir ne sont pas déclenchés simultanément et ne sont pas mis en oeuvre simultanément. Le système de confort interactif 40à selon l'invention permet d'assurer le bon fonctionnement du capteur capacitif 403 en coupant le chauffage de la structure chauffante 401 lors du mode de détection capacitive. En particulier, par exemple, la structure chauffante 401 peut être mise dans un mode de protection électrique (comme décrit plus haut) qui permet de ne pas parasiter la détection capacitive par le capteur capacitif 403. Le fait d'interrompre le chauffage de la structure chauffante 401 permet en outre de ne pas générer d'ondes électromagnétiques parasites du fait de courants électriques qui circuleraient au sein de cette structure chauffante 401.

On voit sur la figure 15, sur le grpahe du bas, l'alternance de mode de chauffage Mh et de mode de détection Md.

Dans l'exemple décrit, le mode de chauffage Mh dure plus longtemps que le mode de détection Md. Le mode de détection capacitive peut durer par exemple entre 2 ms et 5 ms (milliseconde) tandis que le mode de chauffage peut durer, par exemple, entre 10 ms et 30 ms.

L'invention permet, dans ce contexte, de réduire la durée nécessaire Dreq pour que la structure chauffante 401 atteigne la température de consigne Treq.

On voit sur le graphe du haut de la figure 15, que la montée en température atteint d'abord le palier de la température de protection Tpro avant d'atteindre la température de consigne Treq.

En effet, la durée nécessaire DPro pour que la structure chauffante 401 atteigne la température de consigne Tpro est réduite car, pendant cette durée Dpro, le mode détection Md n'est pas activé. En réduisant la durée Dpro, on réduit la durée Dreq.

Le fait de laisser inactif le capteur capacitif 403 pendant cette montée en température permet d'accélérer le chauffage, par rapport au cas où l'on aurait mis en oeuvre une alternance entre mode de chauffage et mode de détection capacitive pendant la montée en température de la structure chauffante. Pendant le mode de détection, la structure chauffante 401 n'est pas chauffée.

Une fois la température de consigne Treq atteinte, les modes de chauffage Mh et de détection Md alternent pendant la durée Dfonc de fonctionnement permanant.

Dans la présente invention, il est choisi de ne pas mettre en oeuvre cette alternance entre mode de chauffage et mode de détection capacitive pour privilégier la montée en température. Autrement dit, il est accepté de ne pas réaliser de détection capacitive Md pendant la montée en température. L'absence de détection capacitive pendant cette montée en température n'est pas préjudiciable au regard de la sécurité du ou des personnes susceptibles de toucher le système de confort interactif 400.

En effet, pendant cette montée en température qui peut prendre comme point de départ une température de repos T0, par exemple une température ambiante, le risque de brûlure par contact est inexistant car la structure chauffante est à une température (encore assez faible) ne provoquant pas de brûlure.

La détection capacitive est omise pendant cette phase de montée en température pour privilégier la montée en température.

La température de repos T0 est par exemple une température que prend le système de confort interactif 400 lorsqu'il a été laissé au repos pendant une période assez longue, notamment pour qu'il soit en équilibre thermique avec l'environnement ambiant. La température de repos T0 est par exemple une température ambiante, par exemple une température comprise entre 15°C et 25°C. La structure chauffante 401 n'est pas encore, à ce moment, chauffée.

Une fois la température de consigne Treq atteintel, le mode de détection capacitive Md est utilisé de nouveau, pour détecter l'approche ou le contact d'une personne sur le système de confort interactif 400 et interrompre le chauffage de la structure chauffante 401 en cas de détection d'une approche ou d'un contact.

En fonctionnement permanent Dfonc, l'unité de contrôle 403 est configurée pour interrompre le mode de chauffage Mh en cas de détection d'un contact ou d'une approche d'une personne sur le système de confort interactif 400.

La température de consigne Treq peut être une température égale à 100°C ou 110°C ou 120°C.

L'unité de contrôle 403 est configurée pour utiliser des signaux PWM pour commander des interrupteurs, notamment de type MOSFET, pour contrôler le chauffage, et basculer alternativement du mode de chauffage au mode de détection capacitive.

D'autres moyens de contrôle, différents des signaux PWM, peuvent être utilisés.

On rappelle que le capteur capacitif 403 comporte au moins une armature électrique formant une électrode capacitive, l'armature électrique et la structure chauffante 401 forment un empilement dans lequel l'armature électrique est disposée entre la couche résistive et la zone de détection.

Bien entendu, il est possible de ne pas prévoir, dans le système de confort interactif 400, de couche lumineuse de sorte que la fonction de chauffage seule est conservée, en étant dépourvue de fonction lumineuse.

## Revendications

1. Système de confort interactif (400), notamment destiné à être installé à l'intérieur d'un habitacle d'un véhicule, notamment d'un véhicule automobile, le système comprenant :
- une structure chauffante (401) comportant :
∘ au moins une couche résistive (402) agencée pour produire de la chaleur lorsque cette couche est parcourue par un courant électrique, cette couche résistive étant notamment une nappe à base de carbone déposée sur un substrat,
∘ au moins deux électrodes en contact électrique avec la couche résistive de manière à permettre à un courant électrique de circuler à travers la couche résistive entre ces deux électrodes,
- un capteur capacitif (403) agencé pour détecter, dans une zone de détection, une présence d'une partie d'un passager, par exemple un bras, un coude, une main ou un doigt (FG) du passager,
- une unité de contrôle (410) configurée pour contrôler la structure chauffante (401) et le capteur capacitif (403) avec un mode de chauffage de la structure chauffante (401) et un mode de détection capacitive du capteur capacitif (403),
système dans lequel l'unité de contrôle (410) est configurée pour, dans une phase (Dreq) de montée en température de la structure chauffante (401) en vue d'atteindre une température prédéterminée, mettre en marche uniquement le mode de chauffage de la structure chauffante (401).

2. Système de confort interactif (400) selon la revendication précédente, dans lequel la température prédéterminée à atteindre lors de la phase de montée en température de la structure chauffante (401) est une température de consigne (Treq), la température de consigne étant notamment une température égale à 100°C ou 110°C ou 120°C.

3. Système de confort interactif (400) selon la revendication précédente, dans lequel, dans le cas où l'unité de contrôle (410) mémorise une température de protection (Tpro), et si la température de consigne (Treq) est choisie supérieure à cette température de protection (Tpro), laisser le capteur capacitif (403) inactif jusqu'à ce que la température de protection soit atteinte et activer le fonctionnement du capteur capacitif (403) à partir la température de protection.

4. Système de confort interactif (400) selon l'une revendications précédentes, dans lequel la température de protection (Tpro) est choisie de sorte que, lorsque la structure chauffante (401) est à une température inférieure à cette température de protection, le contact de la peau d'une personne avec le système de confort interactif ne provoque pas de brûlure sur la personne, cette température de protection est par exemple choisie égale à 70°C ou 75°C.

5. Système de confort interactif (400) selon l'une revendications précédentes, dans lequel l'unité de contrôle (410) est configurée pour, une fois la température de consigne (Treq) atteinte ou, le cas échéant, la température de protection (Tpro) atteinte, mettre en oeuvre le mode de chauffage de la structure chauffante (401) et le mode de détection capacitive du capteur capacitif (403) de manière alternée

6. Système de confort interactif (400) selon l'une revendications précédentes, dans lequel l'unité de contrôle (410) est configurée pour interrompre le mode de chauffage en cas de détection d'un contact ou d'une approche d'une personne sur le système de confort interactif.

7. Système de confort interactif (400) selon l'une revendications précédentes, dans lequel l'unité de contrôle est configurée pour utiliser des signaux PWM pour commander des interrupteurs, notamment de type MOSFET, pour contrôler le chauffage, et basculer alternativement du mode de chauffage au mode de détection capacitive.

8. Système de confort interactif (400) selon l'une revendications précédentes, dans lequel le capteur capacitif (403) comporte au moins une armature électrique formant une électrode capacitive, l'armature électrique et la structure chauffante (401) forment un empilement dans lequel l'armature électrique est disposée entre la couche résistive et la zone de détection.

9. Système de confort interactif (400) selon l'une revendications précédentes, dans lequel le système est agencé pour générer un signal de pilotage électrique du chauffage de la couche résistive de la structure chauffante (401), ce signal de pilotage électrique étant configuré pour faire fonctionner alternativement la structure chauffante (401) en mode de chauffage et en mode de protection électrique dans lequel l'intensité d'un champ électrique entre la couche résistive de la structure chauffante (401) et l'armature électrique du capteur capacitif (403) est réduite de manière active à l'aide du signal de pilotage.

10. Système de confort interactif (400) selon l'une revendications précédentes, dans lequel, en mode de chauffage de la structure chauffante (401), le signal de pilotage est un signal PMW dont le rapport cyclique est réglable en fonction de la puissance de chauffage requise.

11. Procédé de gestion d'un système de confort interactif selon l'une des revendications précédentes, comportant les étapes suivantes :
- recevoir une température de consigne (Treq) ou, le cas échéant, une température de protection (Tpro) si la température de consigne est plus grande que la température de protection ;
- déclencher le mode de chauffage de la structure chauffante (401) pour permettre une montée en température jusqu'à ce que la température de consigne soit atteinte ou, le cas échéant, la température de protection est atteinte ;
- activer le capteur capacitif (403) pour permettre le mode de détection capacitive.

12. Procédé selon la revendication précédente, dans lequel le mode de détection capacitive dure entre 2 ms et 5 ms (milliseconde) tandis que le mode de chauffage peut durer, par exemple, entre 10 ms et 3à ms.

13. Procédé selon l'une des revendications 11 et 12, comportant l'étape suivante :
- activer le mode de chauffage de la structure chauffante (401) de manière alternée avec le mode de détection capacitive, tant qu'aucune approche ou contact n'est détecté par le capteur capacitif (403) en mode de détection capacitive.

14. Procédé selon l'une des revendications 11 à 13, en cas de détection d'un contact (toucher) ou d'une approche sur le système de confort interactif, l'unité de contrôle est configurée pour commander l'interruption du mode de chauffage.
